# EUROPÄISCHE PATENTANMELDUNG

(11) **EP 2 450 224 A1**
(43) Veröffentlichungstag der Anmeldung: **09.05.2012**
(21) Anmeldenummer: 11192531.9
(22) Anmeldetag: 08.12.2008
(51) Int. Cl.: B60N 2/06, B60N 2/23

(54) **Getriebebaueinheit einer Verstelleinrichtung eines Kraftfahrzeugs**

(30) Priorität: 07.12.2007 DE 102007059744
(62) Teilanmeldung aus: 08170990.9
(71) Anmelder: Brose Fahrzeugteile GmbH & Co. KG, Coburg, 96450 Coburg (DE)
(72) Erfinder: Suck, Wolfgang, 96450 Coburg (DE); Fischer, Sven, 96482 Ahron (DE); Bätz, Harald, 96450 Coburg (DE); Birkefeld, Hans-Jörg, 34121 Kassel (DE); Siller, Jürgen, 96472 Rödental (DE)
(74) Vertreter: Baumgärtel, Gunnar

(57) **Zusammenfassung**

Die Erfindung bezieht sich auf eine Getriebebaueinheit einer Verstelleinrichtung eines Kraftfahrzeugs, die zur Betätigung eines Verstellteiles des Kraftfahrzeugs ausgebildet und vorgesehen ist, mit einem Getriebegehäuse, mit einer am Getriebegehäuse gelagerten Getriebebaugruppe, deren Elemente zumindest teilweise innerhalb des Getriebegehäuses angeordnet sind, mit einem längserstreckten Getriebeteil, das zumindest einseitig aus dem Getriebegehäuse hinausragt, und mit einem Halter, der das Getriebegehäuse umgreift und der mindestens eine Durchgangsöffnung aufweist, die von dem längserstreckten Getriebeteil durchgriffen wird.

Dabei ist außerhalb des Getriebegehäuses (4) mindestens ein Sicherungselement (6, 7) angeordnet, welches das längserstreckte Getriebeteil (1) an seiner Außenseite (10) umgibt und welches derart mit dem Halter (5) in Wirkverbindung steht, dass das Sicherungselement (6, 7) bei einer durch äußere Kräfte ausgelösten Deformation des Halters (5) ebenfalls deformiert und hierbei mit dem längserstreckten Getriebeteil (1) in Eingriff gebracht wird, wobei das Sicherungselement (9, 105) durch einen zweiten Schenkel (52) des Halters (5) gebildet wird, welcher sich geometrisch derart von dem ersten Schenkel (51) unterscheidet, dass die beiden Schenkel (51, 52) nicht durch eine Symmetrieoperation ineinander überführt werden können.

## Beschreibung

Die Erfindung betrifft eine Getriebebaueinheit einer Verstelleinrichtung eines Kraftfahrzeugs nach dem Oberbegriff des Anspruchs 1.

Eine derartige Getriebebaueinheit bzw. die zugehörige Verstelleinrichtung als nächst größere Einheit dient zur Betätigung eines Verstellteils eines Kraftfahrzeugs, z. B. eines verstellbaren Sitzteiles, einer höhenverstellbaren Fensterscheibe, einer verstellbaren Armstütze in einer Kraftfahrzeugtür, eines Schiebedaches oder dergleichen.

Die Getriebebaueinheit umfasst ein Getriebegehäuse, an dem eine Getriebebaugruppe gelagert ist, deren Elemente zumindest teilweise innerhalb des Getriebegehäuses angeordnet sind und die mit einem längserstreckten Getriebeteil in Eingriff stehen, das zumindest einseitig aus dem Getriebegehäuse hinausragt. Weiterhin ist ein Halter, z. B. in Form eines U-förmigen Haltewinkels (mit zwei über eine Basis verbundenen Schenkeln), gegebenenfalls mit zusätzlich abgewinkelten freien Enden, vorgesehen, der das Getriebegehäuse umgreift und der zumindest in einem Schenkel eine Durchgangsöffnung aufweist, die von dem längserstreckten Getriebeteil durchgriffen wird.

Eine derartige Getriebebaueinheit ist beispielsweise aus der DE 198 61 100 A1 bekannt. Hierbei ist das längserstreckte Getriebeteil als eine Gewindespindel oder eine Zahnstange ausgebildet, das an zwei einander gegenüberliegenden Seiten aus dem Getriebegehäuse hinausragt und mit seinen aus dem Getriebegehäuse hinausragenden Abschnitten jeweils eine Durchgangsöffnung in einem dem Getriebegehäuse zugeordneten Halter in Form eines U-förmigen Haltewinkels mit zusätzlich abgewinkelten freien Enden durchgreift. Der Halter dient dabei einerseits zur Aufnahme des Getriebegehäuses im Normalbetrieb der zugehörigen Verstelleinrichtung, z. B. einer Sitzlängsverstellung oder eines Fensterhebers, und andererseits zur Erhöhung der Sicherheit in einem Crash-Fall.

In einem Crash-Fall besteht bei Wirkung entsprechend großer äußerer Kräfte das Risiko, dass das längserstreckte Getriebeteil, z. B. in Form einer Gewindespindel oder einer Zahnstange, mit den weiteren Getriebeelementen der am Getriebegehäuse gelagerten Getriebebaugruppe außer Eingriff gerät und es unter der Wirkung der äußeren Kräfte zu einer ungebremsten, beschleunigten Relativbewegung jener Getriebeelemente entlang des längs erstreckten Getriebeteiles kommt. Dies hätte eine entsprechende Bewegung des zugeordneten Verstellteiles, z. B. eines Sitzteiles, zur Folge, was wiederum ein erhöhtes Verletzungsrisiko für einen Fahrzeuginsassen nach sich zöge. Dies soll dadurch verhindert werden, dass sich die freien Schenkel des im Querschnitt U-förmigen Halters unter der Wirkung der äußeren Kräfte neigen und sich hierbei die Ränder der Durchgangsöffnungen jener Schenkel in die äußere Oberfläche des längserstreckten Getriebeteiles eingraben.

Der Erfindung liegt das Problem zugrunde, die Crash-Sicherheit einer Getriebebaueinheit der eingangs genannten Art noch weiter zu verbessern.

Dieses Problem wird erfindungsgemäß durch die Schaffung einer Getriebebaueinheit mit den Merkmalen des Anspruchs 1 gelöst.

Danach ist außerhalb des Getriebegehäuses mindestens ein von dem ersten Halteschenkel des Halters verschiedenes und sich hiervon geometrisch (also hinsichtlich seiner äußeren Kontur und/oder seiner Abmessungen) unterscheidendes Sicherungselement angeordnet, welches das längserstreckte Getriebeteil an seiner Außenseite derart umgibt, dass das längserstreckte Getriebeteil in dem Sicherungselement entlang seiner Erstreckungsrichtung (frei) längsverschieblich, also ohne wechselseitigen Eingriff, geführt bzw. aufgenommen ist, und welches derart mit dem Halter in Wirkverbindung steht, dass es bei einer durch äußere Kräfte ausgelösten Deformation des Halters (durch hiermit einhergehende Deformation und/oder Verkippen des Sicherungselementes) zumindest abschnittsweise bezüglich des längserstreckten Getriebeteiles räumlich verlagert wird und hierdurch mit dem längserstreckten Getriebeteil in Eingriff gebracht wird, insbesondere gegen dieses gedrückt wird, um eine Längsverschiebung des längserstreckten Getriebeteiles zu verhindern.

Dass das Sicherungselement sich in seiner Geometrie von dem einen, ersten Halteschenkel des Halters unterscheidet, bedeutet dabei, dass der besagte Halteschenkel und das Sicherungselement nicht durch eine Symmetrieoperation, wie zum Beispiel Spiegelung, Drehung oder dergleichen, ineinander überführbar sind.

Dass das längserstreckte Getriebeteil in dem Sicherungselement entlang seiner Erstreckungsrichtung ohne wechselseitigen Eingriff (längsverschieblich) geführt ist, bedeutet, dass das Sicherungselement als solches vor einer möglichen Deformation des Halters als Folge einer crash-bedingten Belastung einer Längsbewegung des längserstreckten Getriebeteiles entlang seiner Erstreckungsrichtung zunächst nicht entgegen steht. Mit anderen Worten ausgedrückt, ist das bestimmungsgemäß in der Getriebebaueinheit angeordnete, durch Crash-Kräfte weder deformierte noch verlagerte Sicherungselement nicht geeignet, eine Längsverschiebung des längserstreckten Getriebeteiles entlang seiner Erstreckungsrichtung zu verhindern. Hierdurch ist gewährleistet, dass bei einer crash-bedingten Deformation und/oder Verlagerung des Sicherungselementes ein definierter, gezielter Eingriff des Randes einer das längserstreckte Getriebeteil umgebenden Aufnahmeöffnung des Sicherungselementes mit dem längserstreckten Getriebeteil herbeigeführt werden kann. Unter einem Sicherungselement werden somit insbesondere keine Gewindeelemente bzw. mit einem Innengewinde versehene Sicherungsbleche verstanden, wie sie aus der DE 198 15 283 A1 bekannt sind und die über ein Gewinde derart mit einem längserstreckten Getriebeteil in Form einer Gewindespindel in Eingriff stehen, dass die Gewindespindel bezüglich jenes Gewindeelementes bzw. Sicherungsbleches nicht frei verschieblich ist, da ein der Längsverschiebung entgegen stehender Eingriff über ineinander greifende Gewindeabschnitte besteht.

Die anspruchsgemäße (längsverschiebliche) Führung des längserstreckten Getriebeteiles in dem Sicherungselement bedeutet dabei jedoch nicht, dass bei bestimmungsgemäßem Zusammenbau der Getriebebaueinheit das längserstreckte Getriebeteil tatsächlich entlang seiner Erstreckungsrichtung frei bezüglich des Sicherungselementes verschoben werden kann. Denn dem steht ja entgegen, dass aufgrund des Zusammenwirkens des längsverschieblichen Getriebeteiles mit weiteren Getriebeelementen der Verstelleinrichtung das längserstreckte Getriebeteil in der Regel ohnehin nicht frei längsverschieblich ist. Vielmehr bedeutet die besagte freie Führbarkeit, dass nicht das Sicherungselement selbst einer Längsbewegung des Getriebeteiles entgegen steht.

Das Sicherungselement bietet einen zusätzlichen Schutz gegen ein "Durchrutschen" des Getriebegehäuses und daran angeordneter Getriebeelemente entlang des längserstreckten Getriebeteiles unter der Wirkung äußerer Kräfte, da als Folge Crash-bedingter Deformation des Halters nicht nur der erste Schenkel des Halters sondern gezielt das mindestens eine zusätzliche Sicherungselement gegen das längserstreckte Getriebeteil gedrückt werden kann, um eine unkontrollierte Relativbewegung der aus dem Getriebegehäuse, den daran gelagerten Getriebeelementen und dem zugeordneten Halter bestehenden Baugruppe bezüglich des längserstreckten Getriebeteiles zu verhindern.

Hierzu kann das Sicherungselement eine Aufnahmeöffnung aufweisen, die von dem längserstreckten Getriebeteil durchgriffen wird, so dass das Sicherungselement das längserstreckte Getriebeteil mit dem Rand seiner Aufnahmeöffnung umgibt sowie der Rand der Aufnahmeöffnung bei einer Deformation/einem Verkippen des Sicherungselementes gegen das längserstreckte Getriebeteil gedrückt wird und sich - bei Wirkung entsprechend großer äußerer Kräfte - in dieses eingräbt. Dass das Sicherungselement mit dem Rand seiner Aufnahmeöffnung gegen das längserstreckte Getriebeteil gedrückt wird, soll dabei auch die Fälle umfassen, in denen Zugkräfte den Eingriff zwischen Sicherungselement und längserstrecktem Getriebeteil herstellen. Von Bedeutung ist lediglich, dass im Ergebnis der Rand der Aufnahmeöffnung des Sicherungselementes gegen das längserstreckte Getriebeteil drückt, also einen Druck ausübt, und hierdurch einer Längsbewegung jenes Getriebeteiles entgegenwirkt.

Um einen gezielten Eingriff des Randes der Aufnahmeöffnung des Sicherungselementes in die Außenseite des längserstreckten Getriebeteiles zu ermöglichen, wenn jenes Sicherungselement deformiert und/oder verkippt wird, liegt vor einem solchen Deformieren bzw. Verkippen des Sicherungselementes noch kein Eingriff in das längserstreckte Getriebeteil vor, der einer Längsbewegung jenes Getriebeteiles bezüglich des Sicherungselementes entgegenstünde. Hierzu kann insbesondere vorgesehen sein, dass der Rand der Aufnahmeöffnung des Sicherungselementes, mit welchem das Sicherungselement das längserstreckte Getriebeteil umgreift, von der Außenseite (insbesondere einem Außengewinde) jenes Getriebeteiles beabstandet ist.

Um insbesondere den Eingriff des Sicherungselementes in das längserstreckte Getriebeteil unter der Wirkung äußerer Kräfte zu befördern, kann der Öffnungsquerschnitt der Aufnahmeöffnung des Sicherungselementes kleiner sein als der Öffnungsquerschnitt der Durchgangsöffnung des Halters.

Nach der Erfindung wird das Sicherungselement durch einen zweiten Schenkel des Halters gebildet, welcher sich geometrisch derart von dem ersten Schenkel unterscheidet, dass die beiden Schenkel nicht durch eine Symmetrieoperation, insbesondere nicht durch eine Spiegelung, ineinander überführt werden können. Der Halter umgreift dabei mit seinen beiden Schenkeln sowie einer die beiden Schenkel verbindenden Basis das zugeordnete Getriebegehäuse. Die beiden Schenkel des Halters sind hierzu entlang der Erstreckungsrichtung des längserstreckten Getriebeteiles voneinander beabstandet.

Hierbei kann das Sicherungselement beispielsweise an dem zweiten Halteschenkel ausgebildet sein, indem der mit einer Aufnahmeöffnung versehene und vom längserstreckten Getriebeteil durchgriffene Abschnitt des zweiten Halteschenkels als Sicherungselement verschwenkbar am zweiten Schenkel gelagert ist, zum Beispiel über einen geschwächten Materialbereich.

Nach einer anderen Ausführungsform weist der zweite Halteschenkel eine derart vom ersten Halteschenkel abweichende Geometrie auf, dass bei einer Deformation des ersten Halteschenkels, die ggf. zu einem Eingriff des Randes der Durchgangsöffnung des ersten Halteschenkels mit dem längserstreckten Getriebeteil führt, der das Sicherungselement bildende zweite Halteschenkel über den Rand seiner Aufnahmeöffnung mit dem längserstreckten Getriebeteil definiert in Eingriff gerät.

Das längserstreckte Getriebeteil kann beispielsweise durch eine Gewindespindel oder durch eine Zahnstange als einem Bestandteil eines Verstellantriebs eines Kraftfahrzeugs gebildet werden. Ein längserstrecktes Getriebeteil in Form einer Gewindespindel kann dabei, je nach Auslegung der Getriebebaueinheit, drehfest oder drehbar gelagert sein. Ferner kann vorgesehen sein, dass das längserstreckte Getriebeteil mit zwei Abschnitten in zueinander entgegengesetzten Richtungen jeweils aus dem Getriebegehäuse herausragt und eine Durchgangsöffnung im Halter, genau in je einem Schenkel des Halters, durchgreift.

Um über das längserstreckte Getriebeteil eine Verstellbewegung von Verstellteilen eines Kraftfahrzeugs herbeizuführen, kann vorgesehen sein, dass das längserstreckte Getriebeteil einerseits sowie das Getriebegehäuse zusammen mit den daran gelagerten Getriebeelementen und dem Halter andererseits an jeweils einem von zwei zueinander verstellbaren Kraftfahrzeugteilen angeordnet sind, wobei zumindest eines der beiden Kraftfahrzeugteile ein Verstellteil bildet, das bezüglich des anderen Kraftfahrzeugteiles in seiner Position verstellbar ist.

Bei dem Verstellteil kann es sich beispielsweise um ein Sitzteil eines Kraftfahrzeugs handeln. Insbesondere können die beiden zueinander verstellbaren Kraftfahrzeugteile durch jeweils eine Führungsschiene einer Schienenlängsführung gebildet werden, mittels derer ein Fahrzeugsitz in Fahrzeuglängsrichtung verstellbar ist. Hierbei wird eine

Führungsschiene karosseriefest am Kraftfahrzeug angeordnet; und die andere Führungsschiene als Verstellteil längsverschieblich hieran geführt.

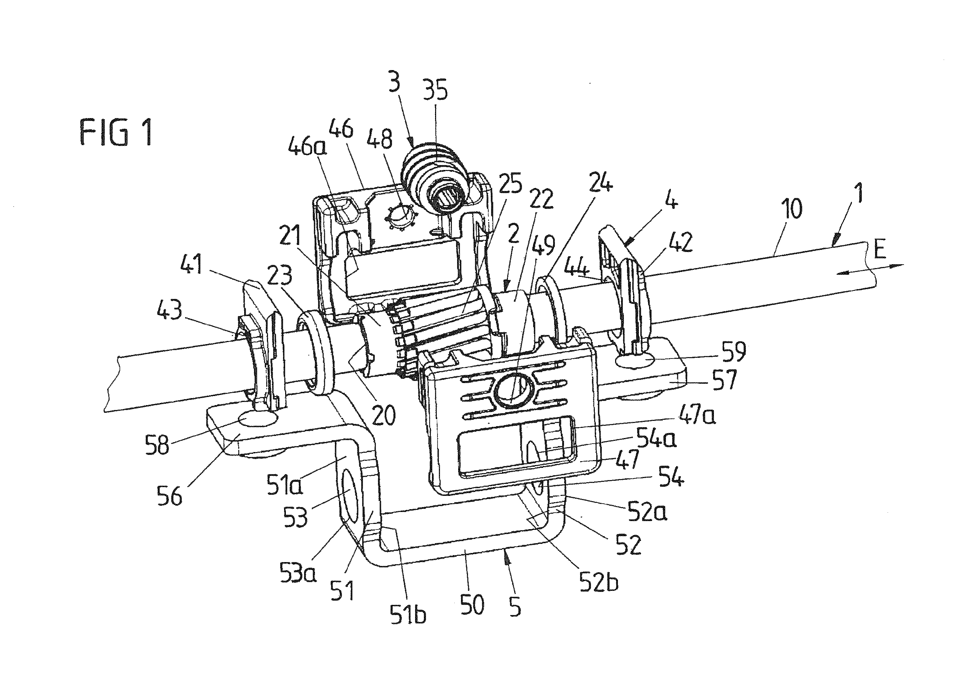

Weitere Einzelheiten und Vorteile der Erfindung werden bei der nachfolgenden Beschreibung von Ausführungsbeispielen anhand der Figuren deutlich werden. Dabei betreffen die Figuren 1 bis 4b kein Ausführungsbeispiel der Erfindung, sondern dienen der Erläuterung des technischen Hintergrundes.

Es zeigen:
- Fig. 1: eine perspektivische Explosionsdarstellung einer Getriebebaueinheit einer Verstelleinrichtung für ein Kraftfahrzeug;
- Fig. 2a: eine Weiterbildung der Anordnung aus Fig. 1 unter Verwendung eines zusätzlichen abgewinkelten Sicherungselementes;
- Fig. 2b: eine schematische Seitenansicht der Anordnung aus Fig. 2a nach einer Crash-bedingten Deformation des Sicherungselementes;
- Fig. 3a: eine Weiterbildung der Anordnung aus Fig. 1 unter Verwendung eines ringförmigen Sicherungselementes;
- Fig. 3b: eine schematische Seitenansicht der Anordnung aus Fig. 3a nach einer Crash-bedingten Deformation des Sicherungselementes;
- Fig. 4a: eine schematische Ansicht einer Abwandlung der Anordnung aus Figur 2a mit zwei Sicherungselementen;
- Fig. 4b: die Anordnung aus Figur 4a nach einem crash-bedingten Verkippen der Sicherungselemente;
- Fig. 5a: eine schematische Ansicht einer Abwandlung der Anordnung aus Figur 2a mit einem in einen Schenkel eines Halters der Getriebebaueinheit integrierten Sicherungselement;
- Fig. 5b: die Anordnung aus Fig. 5a nach einer crash-bedingten Deformation des Sicherungselementes;
- Fig. 6a: eine schematische Ansicht eines im Querschnitt U-förmigen Halters für ein Getriebegehäuse einer Verstelleinrichtung für ein Kraftfahrzeug, dessen zweiter Schenkel zur Bildung eines Sicherungselementes eine bezüglich des ersten Schenkels abgewandelte Geometrie aufweist;
- Fig. 6b: die Anordnung aus Fig. 6a nach einer crash-bedingten Deformation des das Sicherungselement bildenden Schenkels;
- Fig. 7a: eine Abwandlung der Anordnung aus Figur 6a;
- Fig. 7b: die Anordnung aus Figur 7a nach einer crash-bedingten Deformation des das Sicherungselement bildenden Schenkels.

Fig. 1 zeigt eine Getriebebaueinheit einer Verstelleinrichtung eines Kraftfahrzeugs, mit der ein Verstellteil des Kraftfahrzeugs, wie zum Beispiel ein Sitzteil, eine Fensterscheibe oder eine Armstütze, in seiner Position einstellbar ist.

Die Getriebebaueinheit umfasst ein längserstrecktes Getriebeteil 1, hier in Form einer Gewindespindel, auf der eine Spindelmutter 2 derart gelagert ist, dass ein Innengewinde 20 der Spindelmutter 2 mit einem Außengewinde 10 an der Außenseite der Gewindespindel 1 in Eingriff steht. Die Spindelmutter 2 weist weiterhin eine Außenverzahnung 25 in Form einer Schneckenradverzahnung auf, über die sie mit einem Schneckengewinde 35 einer Antriebsschnecke 3 zusammenwirkt.

Die Antriebsschnecke 3 ist durch eine zugeordnete Antriebsbaueinheit, zum Beispiel mittels eines elektromotorischen Antriebs, betätigbar, so dass sie sich um Ihre Längsachse dreht und das vom Antrieb erzeugte Drehmoment über ihr Schneckengewinde 35 und die zugeordnete Schneckenradverzahnung 25 auf die Spindelmutter 2 überträgt.

Durch die Drehmomenteinleitung in die Spindelmutter 2, welche wiederum über ihr Innengewinde 20 auf das Außengewinde 10 der Gewindespindel 1 einwirkt, wird eine Relativbewegung zwischen der Spindelmutter 2 und der Gewindespindel 1 entlang deren Erstreckungsrichtung E ausgelöst, die für eine Verstellbewegung eines Verstellteiles entlang jener Richtung genutzt werden kann, etwa indem die Gewindespindel 1 einerseits und die Spindelmutter 2 andererseits jeweils einem von zwei zueinander verstellbaren Bauteilen eines Kraftfahrzeugs (Kraftfahrzeugteilen) zugeordnet sind, z.B. jeweils eine von zwei zueinander verstellbaren Führungsschienen einer Schienenlängsführung. Dabei kann sowohl eine drehfest als auch eine drehbar gelagerte Gewindespindel 1 vorgesehen sein; in jedem Fall führt die Drehmomenteinleitung über die Antriebsschnecke 3 in die Spindelmutter 2 zu einer Relativbewegung von Spindelmutter 2 und Gewindespindel 1 entlang der Erstreckungsrichtung E der Gewindespindel 1.

Die Spindelmutter 2 ist über - von der Schneckenradverzahnung 25 freie - axiale Endabschnitte 21, 22 und unter Verwendung von Lagerringen bzw. -scheiben 23, 24 in einem aus (zusammensteckbaren) Gehäuseplatten 41, 42, 46, 47 zusammengesetzten Getriebegehäuse 4 drehbar gelagert. Hierzu weist das Gehäuse 4 - in zwei entlang der Längsachse der Spindelmutter 2 einander gegenüber liegenden Gehäuseplatten 41, 42 - entsprechende Lageröffnungen 43, 44 auf. In bzw. an jenem Getriebegehäuse 4 ist außerdem auch die Antriebsschnecke 3 mittels hierfür vorgesehener Lageröffnungen 48, 49 - in den beiden anderen Gehäuseplatten 46, 47 - gelagert. Um einen besonders kompakten Aufbau der Getriebebaueinheit erreichen zu können, weist das Gehäuse 4 außerdem seitliche Fenster 46a, 47a auf, in die die Spindelmutter 2 mit ihrer Schneckenradverzahnung 25 in radialer Richtung hineinragen kann.

Das Getriebegehäuse 4, in bzw. an dem die Spindelmutter 2 und die Antriebsschnecke 3 jeweils drehbar gelagert sind, ist in einem im Querschnitt U-förmigen Halter 5 mit abgewinkelten Endabschnitten 56, 57 aufgenommen und kann über diesen an einem zugeordneten Verstellteil, wie zum Beispiel einer Führungsschiene einer Sitzlängsführung eines Kraftfahrzeugsitzes, befestigt werden.

Der als Haltewinkel ausgestaltete U-förmige Halter 5 weist eine Basisfläche 50 und zwei hiervon abstehende freie Schenkel 51, 52 auf, die jeweils mit einem abgewinkelten Endabschnitt 56 bzw. 57 des Halters 5 versehen sind. Über an diesen abgewinkelten Endabschnitten 56, 57 ausgebildete Befestigungsstellen 58, 59, zum Beispiel in Form von Befestigungsöffnungen, ggf. mit Innengewinde, kann der Halter 5 an dem besagten Kraftfahrzeugteil, wie zum Beispiel einer Führungsschiene einer Schienenlängsführung für einen Kraftfahrzeugsitz, festgelegt werden.

Die Spindel 1 ist dann (drehbar oder drehfest) an einem anderen, zugeordneten Kraftfahrzeugteil, wie zum Beispiel einer zweiten Führungsschiene der Schienenlängsführung gelagert, so dass bei einer Drehmomenteinleitung in die Spindelmutter 2 über die Antriebsschnecke 3 und einer hierdurch hervorgerufenen Relativbewegung der Spindelmutter 2 bezüglich der Gewindespindel 1 entlang deren Erstreckungsrichtung E die beiden Kraftfahrzeugteile, wie zum Beispiel zwei Führungsschienen einer Schienenlängsführung, entlang jener Richtung E relativ zueinander bewegt (verschoben) werden. Die Gewindespindel 1 durchgreift hierbei einerseits die Lageröffnungen 43, 44 für die Spindelmutter 2 im Getriebegehäuse 4 und andererseits benachbart hierzu angeordnete Durchgangsöffnungen 53, 54 in den seitlichen (freien) Schenkeln 51, 52 des Halters 5. Die Ränder 53a, 54a der Durchgangsöffnungen 53, 54 sind dabei von der Gewindespindel und somit insbesondere von deren Außengewinde 10 beabstandet; es besteht also kein Eingriff zwischen jenen Rändern 53a, 54a der Durchgangsöffnungen 53, 54 und der mit einem Gewinde versehenen Außenseite 10 der Gewindespindel 1.

Konkret werden bei einer Relativbewegung der Spindelmutter 2 bezüglich der Gewindespindel 1 entlang deren Erstreckungsrichtung E auch die Antriebsschnecke 3, das Getriebegehäuse 4 und der Halter 5 gemeinsam mit der Spindelmutter 2 relativ zu der Gewindespindel 1 bewegt. Hierdurch bewegen sich jene Komponenten 3, 4, 5 zusammen mit dem hieran befestigten Kraftfahrzeugteil, zum Beispiel einer ersten Führungsschiene einer Schienenlängsführung, bezüglich der Gewindespindel 1 und dem der Gewindespindel 1 zugeordneten Kraftfahrzeugteil, zum Beispiel einer zweiten Führungsschiene.

Eine Getriebebaueinheit der in Fig. 1 dargestellten Art ist, insbesondere auch hinsichtlich ihrer Anwendungen als Bestandteil einer Verstelleinrichtung eines Kraftfahrzeugs, in der DE 198 61 100 A1 detailliert beschrieben. Hierauf wird ergänzend voll inhaltlich Bezug genommen.

Bei einer solchen Anordnung dient der Halter 5 nicht nur zur Aufnahme des Getriebegehäuses 4 und der daran gelagerten Getriebebaugruppe 2, 3 und zu deren Befestigung an einem Kraftfahrzeugteil über die halterseitigen Befestigungsstellen 58, 59, sondern der Halter 5 dient darüber hinaus zur Erhöhung der Crash-Sicherheit der Getriebebaueinheit.

Wirken in einem Crash-Fall externe Kräfte insbesondere entlang der Erstreckungsrichtung E der Gewindespindel 1 auf die Getriebebaugruppe 1, 2, 3, so kann als Folge hiervon das Innengewinde 20 der Spindelmutter 2 derart beschädigt werden, dass dieses nicht mehr in zuverlässigem Eingriff mit dem Außengewinde 10 der Gewindespindel 1 steht und die Spindelmutter 2 zusammen mit der Antriebsschnecke 3, dem Getriebegehäuse 4 und dem Halter 5 eine unter den externen Kräften beschleunigte, weitgehend ungebremste Längsbewegung entlang der Erstreckungsrichtung E der Gewindespindel 1 ausführte. Es wird hierbei auch von einem so genannten "Durchrutschen" der besagten Komponenten 2, 3, 4, 5 bezüglich der Gewindespindel 1 gesprochen. Dies hätte zur Folge, dass ein mittels der in Fig. 1 gezeigten Getriebebaueinheit zu verstellendes Kraftfahrzeugteil, wie zum Beispiel ein Sitzteil eines Kraftfahrzeugsitzes, in einem Crash-Fall eine unkontrollierte, stark beschleunigte Bewegung durchführte, was mit Verletzungsrisiken für Kraftfahrzeuginsassen verbunden wäre.

Dem kann mittels des Halters 5 dadurch entgegengewirkt werden, dass dieser unter der Wirkung entlang der Erstreckungsrichtung E der Gewindespindel 1 gerichteter äußerer Kräfte deformiert wird, wobei es insbesondere zu einer Schrägstellung der seitlichen Schenkel 51, 52 des U-förmigen Halters 5 bezüglich der Basis 50 und somit auch bezüglich der Gewindespindel 1 kommt. Hierbei wird der Rand 53a, 54a der Durchgangsöffnung 53 bzw. 54 im jeweils schräg gestellten seitlichen Schenkel 51, 52 des Halters 5 gegen die äußere Oberfläche, also das Außengewinde 10, der Gewindespindel 1 gedrückt und gräbt sich bei Wirkung entsprechend großer Kräfte gegebenenfalls sogar hierin ein. Dies führt zu einer zwischen dem Halter 5 und der Gewindespindel 1 wirkenden Haltekraft, die einer unkontrollierten Bewegung der aus der Getriebebaugruppe 2, 3, dem Getriebegehäuse 4 und dem Halter 5 bestehenden Baugruppe entlang der Gewindespindel 1 entgegenwirkt, um diese zu verhindern. Da die Deformation des Halters 5, die zu der angestrebten Schrägstellung der seitlichen Schenkel 51, 52 führen soll, auf diejenigen externen Kräfte zurückgeht, die auch das Risiko eines Durchrutschens der Spindelmutter 2 bezüglich der Gewindespindel 1 begründen, führen besonders große äußere Kräfte tendenziell nicht nur zu einem erhöhten Risiko des Durchrutschens sondern gleichzeitig auch zu einer stärkeren Deformation des Halters 5 und somit zu einer stärkeren Halte- bzw. Bremswirkung beim Eingriff des Halters 5 mit mindestens einem Rand 53a, 54a seiner Durchgangsöffnungen 53, 54 in die Gewindespindel 1, insbesondere deren Außengewinde 10.

Allerdings können bei einem Crash-Fall, je nach konkreter Wirkrichtung der hiermit verbundenen äußeren Kräfte an der Getriebebaueinheit 1 - 5, an einem oder beiden seitlichen Schenkeln 51, 52 des Halters 5 auch solche Deformationen auftreten, die zu einem weniger starken Eingriff des Randes 53a, 54a der jeweiligen Durchgangsöffnung 53, 54 in die Gewindespindel 1 führen als eine definierte Schrägstellung des jeweiligen seitlichen Schenkels 51, 52. So kommt es regelmäßig nur bei einem der beiden Schenkel 51, 52 des Halters 5 zu einem substanziellen Eingriff des Randes 53a, 54a der zugehörigen Durchgangsöffnung 53, 54 in die Gewindespindel 1, der einer Längsverlagerung der Gewindespindel 1 wirksam entgegen steht. Dies kann als eine Art Überbestimmung des Systems bezeichnet werden, in der Weise, dass eine bestimmte Deformation eines der beiden Halteschenkel 51, 52, welche zu einem Eingriff mit der Gewindespindel 1 führt, gleichzeitig einer Deformation des anderen der beiden Halteschenkel 51, 52, die ebenfalls einen solchen Eingriff nach sich zöge, entgegenwirkt.

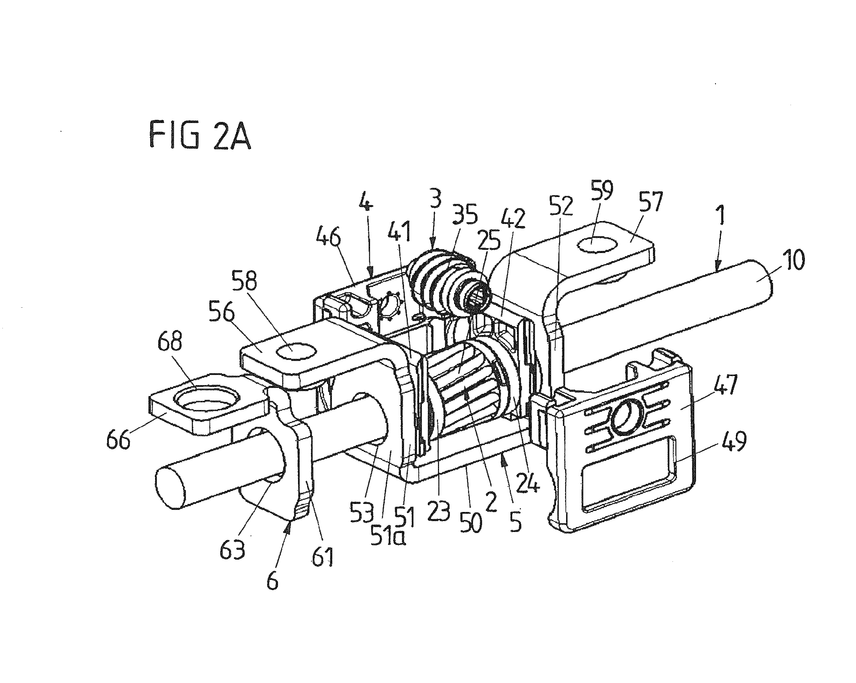

Um in solchen Fällen ein möglicherweise verbleibendes Restrisiko hinsichtlich des vorstehend beschriebenen "Durchrutschens" der Spindelmutter 2 bezüglich der Gewindespindel 1 möglichst weitgehend auszuschließen, sind vorliegend die nachfolgend anhand der Figuren 2a bis 7b beschriebenen Maßnahmen vorgesehen.

Fig. 2a zeigt eine Weiterbildung der Anordnung aus Fig. 1, gemäß der vor einem seitlichen Schenkel 51 des Halters 5, nämlich vor der dem Getriebegehäuse 4 und der Getriebebaugruppe 1, 2, 3 abgewandten (äußeren) Seitenwand 51 a jenes Schenkels 51, ein zusätzliches Sicherungselement 6 angeordnet ist. Dieses umfasst einen plattenförmigen Grundkörper 61 mit einer Aufnahmeöffnung 63, die im Ausführungsbeispiel mit der Durchgangsöffnung 53 des benachbarten seitlichen Schenkels 51 des Halters 5 fluchtet und die von der Gewindespindel 1 durchgriffen wird. Das Sicherungselement 6 kann dabei mit seinem plattenförmigen Grundkörper 61 an dem zugeordneten seitlichen Schenkel 51 bzw. genauerer dessen äußerer Seitenwand 51 a, anliegen.

Darüber hinaus ist das Sicherungselement 6 am Halter 5 befestigt, und zwar im Ausführungsbeispiel über einen vom plattenförmigen Grundkörper 61 des Sicherungselements 6 abgewinkelten Befestigungsabschnitt 66, der hier mit einer Befestigungsstelle 68 in Form einer Befestigungsöffnung versehen ist. Diese fluchtet mit einer Befestigungsstelle 58, z. B. in Form einer Befestigungsöffnung, ggf. mit Innengewinde, am Halter 5, genauer an einem abgewinkelten Endabschnitt 56 des dem Sicherungselement 6 zugeordneten seitlichen Schenkels 51 des Halters 5. Hiermit kann das Sicherungselement 6 am Halter 5 bzw. zusammen mit dem Halter 5 an einem zugeordneten Kraftfahrzeugteil, wie einer Führungsschiene einer Sitzlängsführung, festgelegt werden, z. B. unter Verwendung einer Befestigungsschraube oder eines Niets. Selbstverständlich sind auch andere Befestigungsarten möglich, wie z. B. Verschweißen, Zusammenstecken und dergleichen.

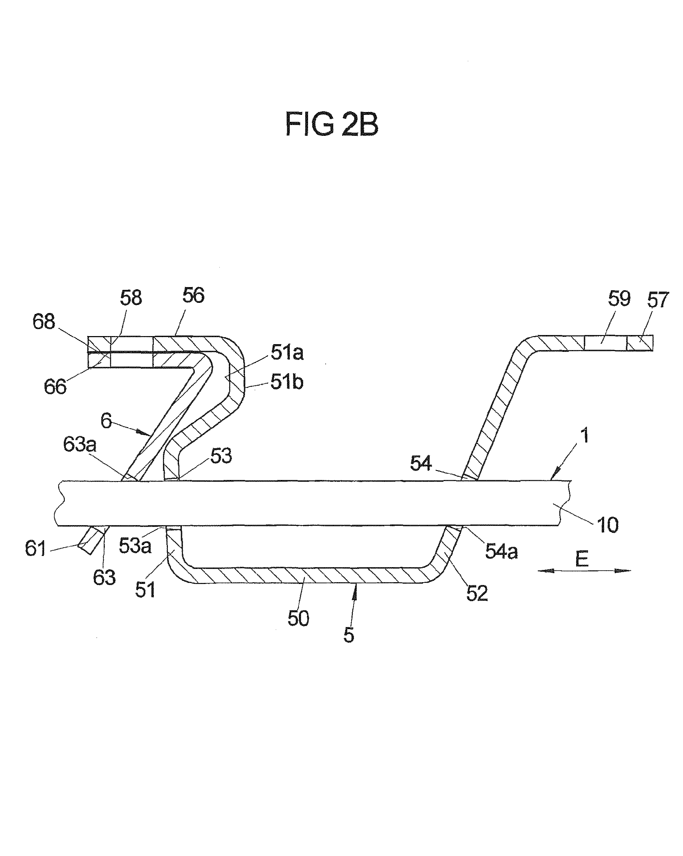

Von Bedeutung ist dabei vorliegend, dass die Befestigungsstelle 68, die der Fixierung des Sicherungselementes 6 bezüglich des Halters 5 dient - wobei es sich einerseits um eine direkte Verbindung zwischen Halter 5 und Sicherungselement 6 handeln kann oder andererseits das Sicherungselement 6 an einem vom Halter 5 verschiedenen Bauteil festgelegt wird, jedoch so, dass es bezüglich des Halters 5 fixiert ist, etwa durch Festlegung des Halters 5 und des Sicherungselementes 6 an ein und derselben Baugruppe -, von der Aufnahmeöffnung 63 des Sicherungselementes 6 räumlich beabstandet ist. Im Bereich der Aufnahmeöffnung 63 des Sicherungselementes 6 soll nämlich eine Relativbewegung zwischen Sicherungselement 6 und Halter 5 unter der Wirkung äußerer Kräfte möglich sein, wie nachfolgend anhand Fig. 2b erläutert werden wird.

Um eine solche Relativbewegung zwischen Sicherungselement 6 und Halter 5 in definierter Weise zuzulassen, so dass insbesondere das Sicherungselement 6 über den Rand 63a seiner Aufnahmeöffnung 63 mit der Gewindespindel 1, genauer deren Außengewinde 10, in Eingriff treten kann, ist der Rand 63a der Aufnahmeöffnung 63 in dem in Figur 2a gezeigten Ausgangszustand (vor Einwirkung crash-bedingter Kräfte) zunächst von der Gewindespindel 1 bzw. deren Außengewinde 10 beabstandet.

Weiterhin unterscheidet sich das Sicherungselement 6 geometrisch derart von dem daneben liegenden ersten Schenkel 51 des Halters 5, dass das Sicherungselement 6 nicht durch eine Symmetrieoperation in jenen ersten Halteschenkel 51 überführbar ist.

Fig. 2b zeigt eine schematische Seitenansicht der Gewindespindel 1, des Halters 5 und des Sicherungselementes 6 aus Fig. 2a in einem Zustand, in dem der Halter 5 unter der Wirkung äußerer Kräfte, die im Ausführungsbeispiel zumindest eine Teilkomponente entlang der Erstreckungsrichtung E der Gewindespindel 1 aufweisen, deformiert worden ist. Da es für die anhand Fig. 2b zu beschreibende Halte- und Sicherungsfunktion in einem Crash-Fall vor allem auf das Zusammenwirken des Halters 5 und des Sicherungselementes 6 mit der Gewindespindel 1 ankommt, ist hier auf die Darstellung der Spindelmutter 2, der Antriebsschnecke 3 sowie des Getriebegehäuses 4 verzichtet worden.

Wie anhand einer Zusammenschau der Figuren 2a und 2b deutlich wird, hat die Belastung der Getriebebaueinheit aus Fig. 2a mit äußeren Kräften (z. B. als Folge eines Crash-Falles) zu einer Deformation des Halters 5 geführt, wobei der eine seitliche Schenkel 51 des Halters 5 sich unter der Wirkung der äußeren Kräfte gewölbt hat, während der andere seitliche Schenkel 52 stark gegenüber seiner ursprünglichen, in Fig. 2a gezeigten Position geneigt worden ist.

Durch die Neigung des zweiten seitlichen Schenkels 52 des Halters 5 - sowohl bezüglich der Basis 50 des Halters 5 als auch bezüglich der Gewindespindel 1 - ist der Rand 54a von dessen Aufnahmeöffnung 54 gegen die Außenseite, also das Außengewinde 10, der Gewindespindel 1 gedrückt worden und mit dieser in Eingriff geraten. Durch die hiermit verbundene Halte- bzw. Bremswirkung wird einem Durchrutschen der aus dem Halter 5 sowie dem Getriebegehäuse 4, der Antriebsschnecke 3 und der Gewindespindel 2 (vergleiche Fig. 2a) bestehenden Baugruppe bezüglich der Gewindespindel 1 entgegengewirkt.

Die Auswölbung des ersten seitlichen Schenkels 51 des Halters 5 unter der Wirkung der externen Kräfte ist demgegenüber im vorliegenden Beispiel so, dass diese keinen relevanten Eingriff des Randes 53a der dortigen Aufnahmeöffnung 53 in die Gewindespindel 1 zur Folge hat. Dafür sorgt hier jedoch das neben dem ersten seitlichen Schenkel 51 des Halters 5 angeordnete Sicherungselement 6 für eine zusätzliche Halte-und Sicherungswirkung.

Aufgrund der Wölbung des ersten seitlichen Schenkels 51 des Halters 5 kommt es nämlich zu einer Krafteinwirkung auf das Sicherungselement 6, welches auf der dem Getriebegehäuse 4 abgewandten Seite des ersten seitlichen Schenkels 51 angeordnet ist, also vor dessen dem Getriebegehäuse 4 abgewandter äußerer Wand 51 a, durch die das Sicherungselement 6 deformiert wird und dessen plattenförmiger Grundkörper 61 sich schräg stellt, wie in Fig. 2b gezeigt.

Dabei bleibt das Sicherungselement 6 im Bereich seiner Befestigungsstelle 68 fixiert, nämlich im vorliegenden Ausführungsbeispiel mit dem Halter 5 verbunden, so dass die Auswölbung des ersten seitlichen Schenkels 51 des Halters 5 zu einer definierten Schrägstellung des plattenförmigen Grundkörpers 61 des Sicherungselementes 6 führt. Hierdurch wird der Rand 63a der Aufnahmeöffnung 63 des Sicherungselementes 6 gegen die Außenseite, also das Außengewinde 10, der Gewindespindel 1 gedrückt und gerät hiermit in Eingriff. Hierdurch wird eine zusätzliche Halte- bzw. Sperrwirkung erzielt, die einem Durchrutschen des Halters 5 zusammen mit dem Getriebegehäuse 4, der Antriebsschnecke 3 und der Spindelmutter 2 entlang der Gewindespindel 1 entgegenwirkt.

Ein Vorteil in der Verwendung eines zusätzlichen Sicherungselementes 6 zu dem besagten Zweck liegt dabei darin, dass dieses Sicherungselement 6 speziell im Hinblick auf seine Eigenschaften als sicherndes Element, also als ein dem besagten Durchrutschen entgegenwirkendes Element, optimiert werden kann, insbesondere durch Optimierung im Hinblick auf eine möglichst große Haltewirkung beim Zusammenwirken des Sicherungselementes 6 mit der Gewindespindel 1, zum Beispiel durch Zusammenwirken des Randes 63a der Aufnahmeöffnung 63 mit der Außenseite der Gewindespindel 1.

Hierzu kann beispielsweise vorgesehen sein, das Sicherungselement 6 derart beabstandet von seiner Aufnahmeöffnung 63 (mittels mindestens einer Befestigungsstelle 68) zu fixieren, dass jene mindestens eine Befestigungsstelle 68 bei der Deformation des Sicherungselementes 6 unter der Wirkung äußerer Kräfte ein definiertes Widerlager bildet, durch welches eine Deformation in Form einer Schrägstellung eines Abschnittes des Sicherungselementes 6 (nämlich des Grundkörpers 61) befördert wird.

Weiterhin kann die Geometrie des Sicherungselementes 6 insgesamt, welches hier einfach abgewinkelt ausgebildet ist und insbesondere am Übergangsbereich vom Befestigungsabschnitt 66 zum Grundkörper 61 deformiert wird, auf die gewünschte Schrägstellung hin ausgerichtet sein.

Außerdem wird ein sicherer Eingriff des Sicherungselementes 6 in die Gewindespindel 1 durch einen möglichst kleinen Öffnungsquerschnitt der Aufnahmeöffnung 63 unterstützt, so dass der Öffnungsquerschnitt jener Aufnahmeöffnung 63 vorteilhaft kleiner gewählt sein kann als der Öffnungsquerschnitt der Durchgangsöffnung 53 am benachbarten seitlichen Schenkel 51 des Halters 5.

Während gemäß den Figuren 2a und 2b der Getriebebaueinheit 1 - 5 genau ein Sicherungselement 6 zugeordnet ist, können auch mehrere derartige Sicherungselemente vorgesehen sein, zum Beispiel ein weiteres Sicherungselement benachbart zum zweiten seitlichen Schenkel 52 des Halters 5.

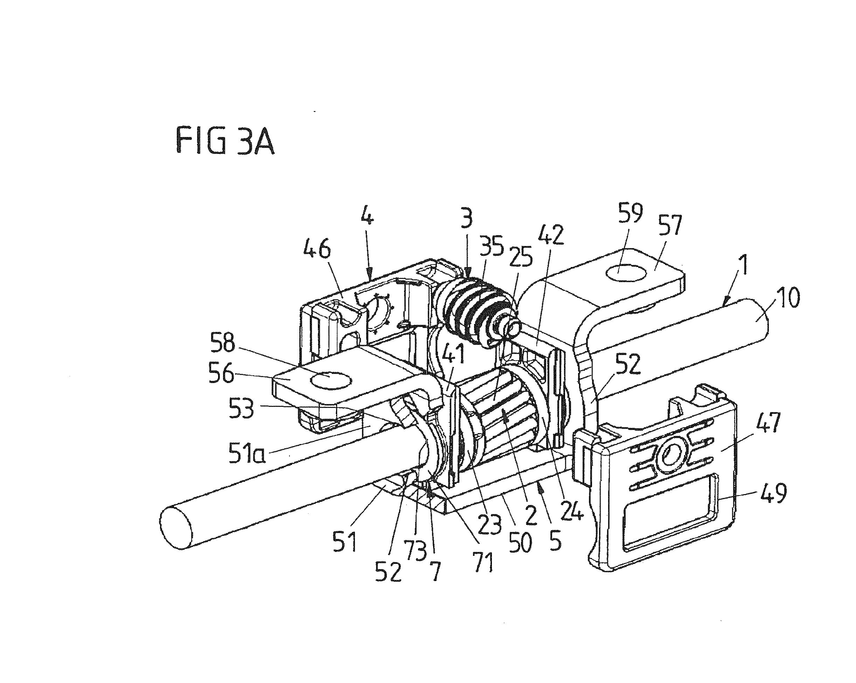

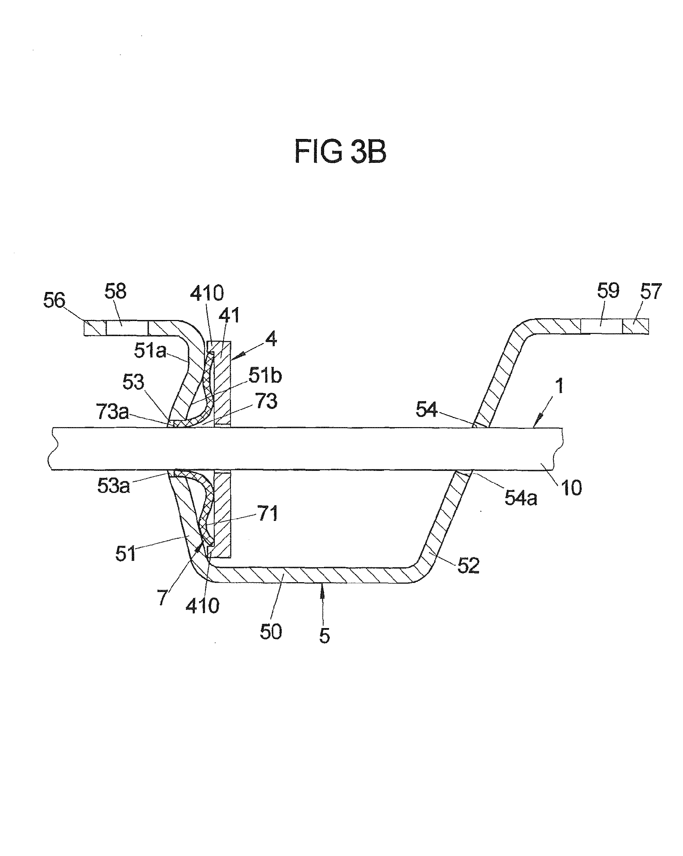

In den Figuren 3a und 3b ist eine Abwandlung des Ausführungsbeispieles aus den Figuren 2a und 2b dargestellt, gemäß der das Sicherungselement 7 einen mit einer Aufnahmeöffnung 73 versehenen Ring 71 aufweist, wobei zu dessen besserer Erkennbarkeit der Halter 5 in Figur 3a mit teilweise aufgebrochenem ersten Halteschenkel 51 gezeigt ist. Dieses Sicherungselement 7 ist auf der dem Getriebegehäuse 4 zugewandten Seite eines ersten seitlichen Schenkels 51 des Halters 5, also vor dessen innerer Seitenwand 51 b, angeordnet. Das Sicherungselement 7 liegt hier also zwischen dem Halter 5 bzw. dessen einem, ersten Schenkel 51 einerseits und dem Getriebegehäuse 4 bzw. einer Gehäuseplatte 41 andererseits.

Die Aufnahmeöffnung 73 des Sicherungselementes 7 fluchtet wiederum mit der Durchgangsöffnung 53 des benachbarten ersten seitlichen Schenkels 51 des Halters 5, wobei auch hier ein möglichst kleiner Öffnungsquerschnitt der Aufnahmeöffnung 73 des Sicherungselementes 7 vorteilhaft ist; jedoch ist der Rand 73a der Aufnahmeöffnung 73 vorteilhaft zunächst von der Gewindespindel 1 bzw. deren Außengewinde 51 beabstandet.

Vorliegend ist das Sicherungselement 7 dadurch bezüglich des Halters 5 fixiert, dass es zwischen dem einen, ersten Schenkel 51 des Halters 5 und dem Getriebegehäuse 4 aufgenommen ist. Eine zusätzliche Befestigung des Sicherungselementes 7 kann daher entfallen, ist jedoch als ergänzende Maßnahme keinesfalls ausgeschlossen. Um dem Sicherungselement 7 einen möglichst definierten Halt in seiner Funktionsposition zu geben, können zusätzliche Sicherungsabschnitte 410, zum Beispiel am Getriebegehäuse 4 oder am Halter 5, vorgesehen sein, welche das Sicherungselement 7 übergreifen. Weiterhin kann das Sicherungselement 7 unter Vorspannung zwischen dem Getriebegehäuse 4 und dem Halter 5 aufgenommen sein und hierzu beispielsweise eine dreidimensionale Krümmung aufweisen, wie in Figur 3b angedeutet.

Wie anhand Fig. 3b deutlich wird, bei der es sich um eine schematische Seitenansicht einiger Komponenten der in Fig. 3a insgesamt gezeigten Getriebebaueinheit handelt, wird bei einer Deformation des ersten Halteschenkels 51 des Halters 5 das (ringförmige) Sicherungselement 7 gegen die Außenseite 10 der Spindelmutter 1 gedrückt und abschnittsweise in die Durchgangsöffnung 53 des Halters 5. Hierdurch gelangt wiederum der Rand 73a der Aufnahmeöffnung 73 des Sicherungselementes 7 in Eingriff mit der Gewindespindel 1 und steht somit einem Durchrutschen der aus dem Halter 5, dem Gehäuse 4, der Antriebsschnecke 3 und der Spindelmutter 2 bestehenden Baugruppe bezüglich der Spindel 1 unter der Wirkung äußerer Kräfte entgegen.

Um die Deformation des Sicherungselementes 7 unter der Einwirkung (Crash-bedingter) äußerer Kräfte zu befördern, kann für jenes Sicherungselement 7 ein hinreichend deformierbares Material verwendet werden und weiterhin können die Dicke sowie die radiale Ausdehnung des Sicherungselementes 7 so (klein) gewählt werden, dass das Sicherungselement 7 einerseits hinreichend stabil ist, um eine Haltewirkung entfalten zu können, wenn es mit der Gewindespindel 1 in Eingriff steht, und dass sich das Sicherungselement 7 andererseits unter der Wirkung äußerer Kräfte hinreichend weit verformen lässt, um überhaupt einen Eingriff mit der Gewindespindel herbeiführen zu können.

Anstatt nur eines ringförmigen Sicherungselementes 7, wie in den Figuren 3a und 3b dargestellt, können auch mehrere, insbesondere zwei, derartige Sicherungselemente 7 vorgesehen sein.

Darüber hinaus kann auch die Anordnung und/oder Ausbildung eines Sicherungselementes gemäß den Figuren 2a und 2b mit einer Anordnung und/oder Ausbildung gemäß den Figuren 3a und 3b kombiniert werden, und zwar einerseits hinsichtlich der Kombination von Sicherungselementen, die vor einer dem Getriebegehäuse 4 abgewandten Seite des Halters 5 angeordnet sind, mit Sicherungselementen, die vor einer dem Getriebegehäuse 4 zugewandten Seite des Halters 5 angeordnet sind, als auch hinsichtlich der Kombination mindestens eines Sicherungselementes mit plattenförmigem Grundkörper mit einem Sicherungselement mit ringförmigem Grundkörper.

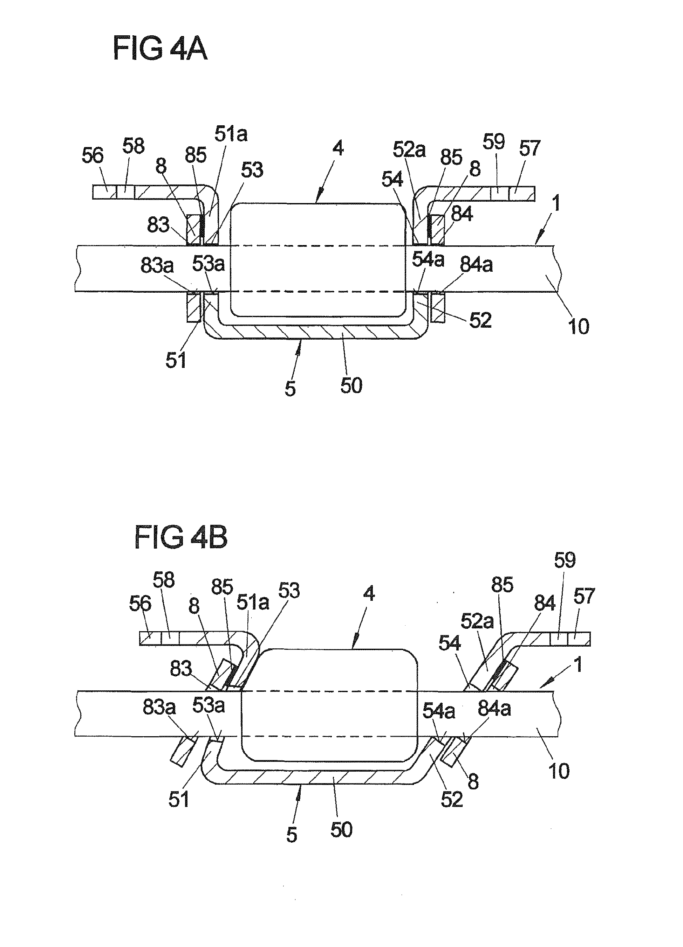

Ein Ausführungsbeispiel einer Getriebebaueinheit mit zwei Sicherungselementen 8 ist in Figur 4a dargestellt. Von den beiden Sicherungselementen 8 ist je eines neben jedem der beiden Schenkel 51, 52 des Halters 5 angeordnet, und zwar jeweils an der äußeren, dem vom Halter 5 aufgenommenen Getriebegehäuse 4 abgewandten Seite des jeweiligen Schenkels 51, 52.

Die beiden Sicherungselemente 8 sind jeweils plattenförmig ausgestaltet und weisen je eine Aufnahmeöffnung 83, 84 auf, die von der Gewindespindel 1 durchgriffen wird. Dabei ist der Querschnitt der Aufnahmeöffnungen 83, 84 bevorzugt derart gewählt, dass die Ränder 83a, 84a jener Aufnahmeöffnungen 83, 84 jeweils von der Gewindespindel 1, insbesondere deren Außenseite bzw. Außengewinde 10, beabstandet sind, auch wenn der Querschnitt der Aufnahmeöffnungen 83, 84 durchaus kleiner gewählt sein kann, als der Querschnitt der Durchgangsöffnungen 53, 54 des Halters 1 bzw. der Schenkel 51, 52.

Die beiden Sicherungselemente 8 sind dabei an der Außenseite des jeweils zugeordneten Schenkels 51, 52 des Halters 5 durch geeignete Befestigungsmittel, hier beispielhaft in Form je einer Schweißnaht 85, festgelegt, un zwar in einem Endabschnitt 51a bzw. 52a des jeweiligen Schenkels 51, 52. Die Befestigungsmittel sind dabei vorteilhaft von der Aufnahmeöffnung 53, 54 des jeweiligen Sicherungselementes 8 beabstandet, um im Fall crash-bedingter Belastungen ein hinreichendes Verkippen der Sicherungselemente 8 bezüglich der Gewindespindel 1 zuzulassen, so dass erstere über den Rand 83a, 84a ihrer jeweiligen Aufnahmeöffnung 83, 84 mit der Gewindespindel 1 bzw. deren Außengewinde 10 in Eingriff treten können, wie anhand Figur 4b erkennbar.

Das Verkippen der beiden Sicherungselemente 8, wodurch sich deren Neigung bezüglich der Längsachse des längserstreckten Getriebeelementes 1, hier in Form einer Gewindespindel, ändert, also insbesondere die anfänglich im Wesentlichen senkrecht zur Längsachse der Gewindespindel 1 stehenden Sicherungselemente 8 in eine geneigte Lage bezüglich jener Längsachse überführt werden, wird auch hier wieder durch eine crash-bedingte Deformation des Halters 5 ausgelöst, mit dem die beiden Sicherungselemente 8 jeweils im Bereich ihres einen (oberen) Endes (über ein Schweißnaht 85) verbunden sind. Das Verkippen der Sicherungselemente 8 als Folge der Deformation des Halters 5 endet, wenn die beiden Sicherungselemente 8 jeweils mit dem Rand 83a, 84a ihrer Aufnahmeöffnung 83, 84 fest gegen die Gewindespindel 1 gedrückt worden sind.

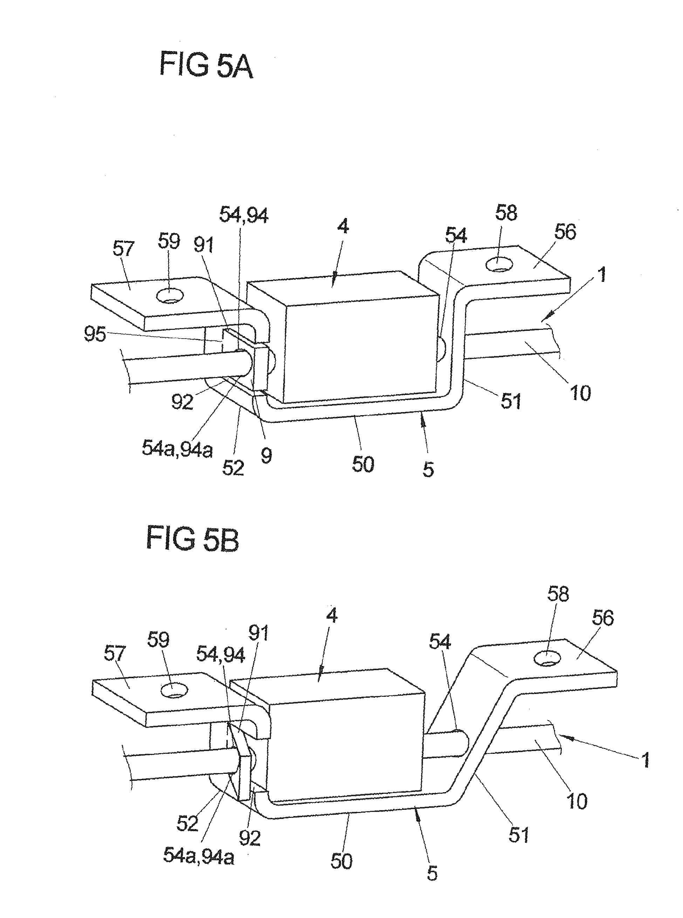

Figur 5a zeigt ein Ausführungsbeispiel der erfindungsgemäßen Getriebeeinheit, bei dem der zweite Schenkel 52 des Halters 5 ein Sicherungselement 9 ausbildet und hierzu geometrisch derart anders ausgebildet ist als der erste Halteschenkel 51, dass sich die beiden Schenkel 51, 52 nicht durch eine Symmetrieoperation, wie zum Beispiel Spiegelung oder Drehung, ineinander überführen lassen.

Konkret ist an dem zweiten Schenkel 52 dadurch ein einstückig angeformtes Sicherungselement 9 ausgebildet, dass ein jenes Sicherungselement 9 bildender Abschnitt des zweiten Schenkels 52 über einen Schwächungsbereich 52 auslenkbar mit dem zweiten Schenkel 52 verbunden ist. Hierzu sind vorliegend im zweiten Schenkel zwei Schlitze 91, 92 vorgesehen, durch welche das einstückig am zweiten Schenkel 52 ausgebildete Sicherungselement 9 abschnittsweise von übrigen Bereichen des zweiten Schenkels 2 getrennt ist, so dass hier nur eine linienhafte Verbindung 95 des Sicherungselementes 9 mit dem zweiten Schenkel 52 entlang einer Seite des Sicherungselementes 9 besteht.

Die Aufnahmeöffnung 94 des Halteelementes 9 wird dabei durch die Durchgangsöffnung 54 des zweiten Schenkels 52 gebildet, so dass dementsprechend auch der äußere Rand 94a der Aufnahmeöffnung 94 durch den äußeren Rand 54a der Durchgangsöffnung 54 definiert ist.

Kommt es Crash-bedingt zu einer Deformation des Halters 5 aus Figur 5a, entsprechend dem Übergang von Figur 5a zur Figur 5b, so kann nicht nur der eine, erste Halteschenkel 51 über den Rand 53a seiner Durchgangsöffnung 53 mit der Gewindespindel 1 in Eingriff treten, sondern bei einem ersten Zusammenwirken der Gewindespindel 1 mit dem Rand der Aufnahmeöffnung 94 des Sicherungselementes 9 kann Letzteres gegen vergleichsweise geringe Widerstände schräg gestellt werden, da es (türartig) nur an einer Seite 95 mit dem zweiten Schenkel 52 des Halters 5 verbunden ist. Die Schrägstellung des Sicherungselementes 9 geht dabei so weit, bis dieses mit dem Rand 94a seiner Aufnahmeöffnung 94 fest an der Gewindespindel 1 bzw. deren Außengewinde 10 anlegt und einer Längsbewegung der Gewindespindel 1 entlang ihrer Erstreckungsrichtung somit entgegenwirkt.

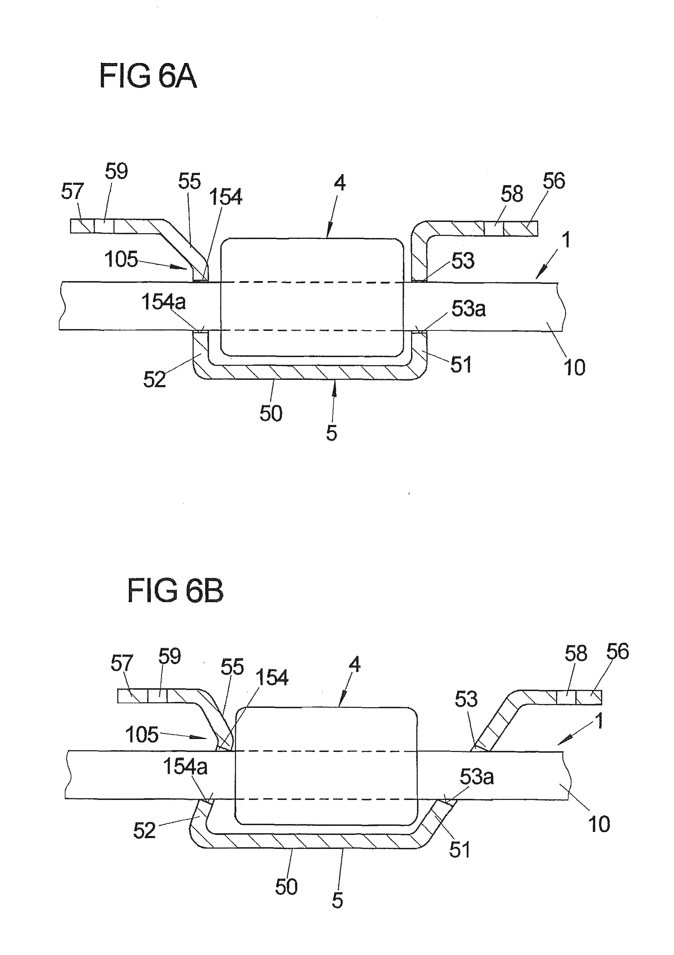

Figur 6a zeigt eine erfindungsgemäße Anordnung, bei der das Sicherungselement 105 durch den zweiten Schenkel 52 des Halters 5 gebildet wird, der verglichen mit dem ersten Schenkel 51 eine derart abgewandelte Geometrie aufweist, dass die beiden Schenkel 51, 52 des Halters 5 nicht durch eine Symmetrieoperation, insbesondere nicht durch eine Spiegelung, ineinander überführt werden können. Vielmehr weist der zweite Schenkel 52 im Unterschied zu dem ersten Schenkel 51 einen in einem spitzen Winkel geneigt zum längserstreckten Getriebeelement in Form einer Gewindespindel 1 verlaufenden Übergangsabschnitt 55 auf, entlang dem der zweite Schenkel 52 in

einen abgewinkelten Endabschnitt 57 des Halters 5 übergeht, während beim ersten Schenkel 51 der abgewinkelte Endabschnitt 56 unmittelbar quer hiervon abgewinkelt ist.

Wie anhand des Übergangs von Figur 6a zu Figur 6b deutlich wird, kann mit dieser Anordnung gezielt erreicht werden, dass beim Einwirken Crash-bedingter äußerer Kräfte, die zu einer Schrägstellung des ersten Schenkels 51 führen, so dass der Rand 53a von dessen Durchgangsöffnung 53 mit der Gewindespindel 1 in Eingriff tritt, auch der das Sicherungselement 105 bildende zweite Schenkel 52 so deformiert wird, dass dessen Durchgangsöffnung 54, welche zugleich die Aufnahmeöffnung 154 des hierdurch definierten Sicherungselementes 105 bildet, mit der Gewindespindel 1 in Eingriff tritt und gegen deren Außenseite (Außengewinde 10) drückt.

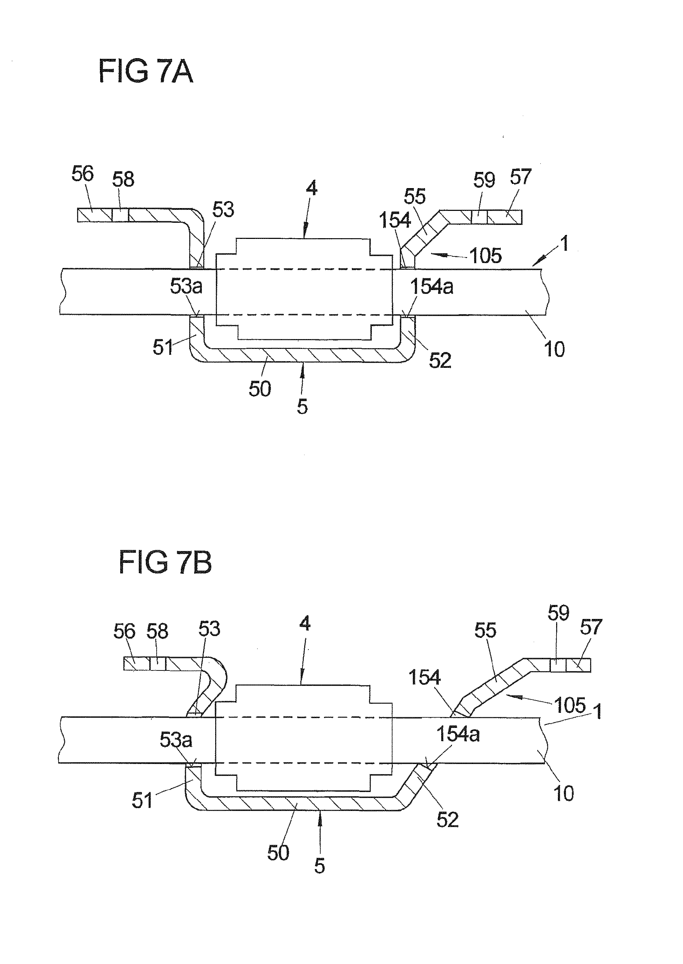

Die Figuren 7a und 7b zeigen eine Abwandlung der Anordnung aus den Figuren 6a und 6b dahingehend, dass entlang der Erstreckungsrichtung des längserstreckten Getriebeteiles, hier in Form einer Gewindespindel 1, die Reihenfolge des ersten und zweiten Schenkels 51, 52 vertauscht ist, wobei auch hier wiederum der zweite Schenkel 52 ein Sicherungselement 105 bildet, indem der zweite Schenkel 52 über einen geneigt zur Gewindespindel 1 verlaufenden Übergangsbereich 55 in einen abgewinkelten Endabschnitt 57 des Halters 5 übergeht.

Mit einer solchen Konfiguration kann beispielsweise erreicht werden, dass unter der Wirkung äußerer Kräfte, die im Fall der Figuren 6a und 6b zum Eingriff beider Schenkel 51, 52 des Halters 5 in die Gewindespindel 1 geführt haben, hier gezielt nur das durch den zweiten Schenkel 52 gebildete Sicherungselement 105 über den äußeren Rand 154a seiner Aufnahmeöffnung 154 mit der Gewindespindel 1 in Eingriff tritt.

## Patentansprüche

1. Getriebebaueinheit einer Verstelleinrichtung eines Kraftfahrzeugs, die zur Betätigung eines Verstellteiles des Kraftfahrzeugs ausgebildet und vorgesehen ist, mit
- einem Getriebegehäuse (4),
- einer am Getriebegehäuse (4) gelagerten Getriebebaugruppe (1, 2, 3), deren Elemente zumindest teilweise innerhalb des Getriebegehäuses (4) angeordnet sind,
- einem längserstreckten Getriebeteil (1), das zumindest einseitig aus dem Getriebegehäuse (4) hinausragt, und
- einem Halter (5), der das Getriebegehäuse (4) umgreift und der zumindest in einem ersten Schenkel (51) eine Durchgangsöffnung (53, 54) aufweist, die von dem längserstreckten Getriebeteil (1) durchgriffen wird,
**dadurch gekennzeichnet,**
**dass** außerhalb des Getriebegehäuses (4) mindestens ein von dem ersten Schenkel (51) des Halters (5) verschiedenes und sich hiervon in seiner Geometrie unterscheidendes Sicherungselement (9, 105) angeordnet ist, welches das längserstreckte Getriebeteil (1) an dessen Außenseite (10) umgibt, ohne einer Längsverschieblichkeit des Getriebeteiles (1) entlang seiner Erstreckungsrichtung entgegen zu stehen, und welches derart mit dem Halter (5) in Wirkverbindung steht, dass das Sicherungselement (9, 105) bei einer durch äußere Kräfte ausgelösten Deformation des Halters (5) zumindest abschnittsweise räumlich verlagert und hierdurch mit dem längserstreckten Getriebeteil (1) in Eingriff gebracht wird, wobei das Sicherungselement (9, 105) durch einen zweiten Schenkel (52) des Halters (5) gebildet wird, welcher sich geometrisch derart von dem ersten Schenkel (51) unterscheidet, dass die beiden Schenkel (51, 52) nicht durch eine Symmetrieoperation ineinander überführt werden können.

2. Getriebebaueinheit nach Anspruch 1, **dadurch gekennzeichnet, dass** das Sicherungselement (9, 105) eine Aufnahmeöffnung (94, 154) aufweist, die von dem längserstreckten Getriebeteil (1) durchgriffen wird, und dass das Sicherungselement (9, 105) das längserstreckte Getriebeteil (1) mit dem Rand (94a, 154a) der Aufnahmeöffnung (63, 73) umgibt, ohne über diesen Rand (94a, 154a) mit dem längserstreckten Getriebeteil (1) in einem Eingriff zustehen, der einer Längsverschiebung des Getriebeteiles (1) entgegenstünde.

3. Getriebebaueinheit nach Anspruch 1 oder 2, **dadurch gekennzeichnet, dass** das Sicherungselement (9, 105) eine Aufnahmeöffnung (94, 154) aufweist, die von dem längserstreckten Getriebeteil (1) durchgriffen wird und deren Rand (94a, 154a) von der Außenseite (10) des längserstreckten Getriebeteiles (1) beabstandet ist.

4. Getriebebaueinheit nach Anspruch 2 oder 3, **dadurch gekennzeichnet, dass** der Rand (94a, 154a) der Aufnahmeöffnung (94, 154) bei der Deformation des Halters (5) gegen das längserstreckte Getriebeteil (1) gedrückt wird.

5. Getriebebaueinheit nach einem der Ansprüche 2 bis 4, **dadurch gekennzeichnet, dass** die Aufnahmeöffnung (94, 154) des Sicherungselementes (9, 105) einen kleineren Öffnungsquerschnitt aufweist als die Durchgangsöffnung (53, 54) des Halters (5).

6. Getriebebaueinheit nach einem der vorhergehenden Ansprüche, **dadurch gekennzeichnet, dass** der Halter (5) zwei entlang der Erstreckungsrichtung des längserstreckten Getriebeteiles (1) voneinander beabstandete Halteschenkel (51, 52) aufweist, die jeweils von dem längserstreckten Getriebeteil (1) durchgriffen werden.

7. Getriebebaueinheit nach Anspruch 6, **dadurch gekennzeichnet, dass** der Halter (5) als ein Haltewinkel ausgebildet ist, der das Getriebegehäuse (4) U-förmig umgreift.

8. Getriebebaueinheit nach einem der vorhergehenden Ansprüche, **dadurch gekennzeichnet, dass** das Sicherungselement (9) einstückig an einem zweiten Schenkel (52) des Halters (5) angeformt ist und mit weiteren Bereichen des zweiten Schenkels (52) über einen durch Materialausnehmungen (91, 92) geschwächten Abschnitt (95) verbunden ist, so dass das Sicherungselement (9) relativ zu den weiteren Bereichen des zweiten Schenkels (52) um den geschwächten Abschnitt (95) klappbar ist.

9. Getriebebaueinheit nach einem der vorhergehenden Ansprüche, **dadurch gekennzeichnet, dass** an dem zweiten Schenkel (52) dadurch ein einstückig angeformtes Sicherungselement (9) ausgebildet ist, dass ein jenes Sicherungselement (9) bildender Abschnitt des zweiten Schenkels (52) über einen Schwächungsbereich auslenkbar mit dem zweiten Schenkel (52) verbunden ist.

10. Getriebebaueinheit nach Anspruch 8 oder 9, **dadurch gekennzeichnet, dass** im zweiten Schenkel (52) zwei Schlitze (91, 92) vorgesehen sind, durch welche das einstückig am zweiten Schenkel (52) ausgebildete Sicherungselement (9) abschnittsweise von übrigen Bereichen des zweiten Schenkels (2) getrennt ist, so dass nur eine linienhafte Verbindung (95) des Sicherungselementes (9) mit dem zweiten Schenkel (52) entlang einer Seite des Sicherungselementes (9) besteht.

11. Getriebebaueinheit nach einem der Ansprüche 8 bis 10, **dadurch gekennzeichnet, dass** die Aufnahmeöffnung (94) des Halteelementes (9) durch die Durchgangsöffnung (54) des zweiten Schenkels (52) gebildet wird, so dass der äußere Rand (94a) der Aufnahmeöffnung (94) durch den äußeren Rand (54a) der Durchgangsöffnung (54) definiert ist.

12. Getriebebaueinheit nach einem der Ansprüche1 bis 7, **dadurch gekennzeichnet, dass** die Geometrie des das Sicherungselement (105) bildenden zweite Schenkels (52) in einem Endabschnitt (55) jenes Schenkels (52) so gewählt ist, dass dieser bei Belastungen, die in Erstreckungsrichtung des längserstreckten Getriebeelementes (1) wirken, durch Deformation mit dem längserstreckten Getriebeelement (1) in Eingriff bringbar ist.

13. Getriebebaueinheit nach einem der Ansprüche 1 bis 7 oder 12, **dadurch gekennzeichnet, dass** der zweite Schenkel (52) ein Sicherungselement (105) bildet, indem der zweite Schenkel (52) über einen geneigt zum längerstreckten Getriebelement (1) verlaufenden Übergangsbereich (55) in einen abgewinkelten Endabschnitt (57) des Halters (5) übergeht.

14. Getriebebaueinheit nach Anspruch 13, **dadurch gekennzeichnet, dass** der zweite Schenkel (52) im Unterschied zu dem ersten Schenkel (51) einen in einem spitzen Winkel geneigt zum längserstreckten Getriebeelement (1) verlaufenden Übergangsabschnitt (55) aufweist, entlang dem der zweite Schenkel (52) in einen abgewinkelten Endabschnitt (57) des Halters (5) übergeht, während beim ersten Schenkel (51) der abgewinkelte Endabschnitt (56) unmittelbar quer hiervon abgewinkelt ist.

15. Getriebebaueinheit nach einem der vorhergehenden Ansprüche, **dadurch gekennzeichnet, dass** der Rand (53a, 54a) der der Durchgangsöffnung (53, 54) des Halters (5) von dem längserstreckten Getriebeteil (1) beabstandet ist und dass der Halter (5) bei der Deformation über den Rand (53a, 54a) der Durchgangsöffnung (53, 54) mit dem längserstreckten Getriebeteil (1) in Eingriff tritt.
